# EUROPÄISCHE PATENTSCHRIFT

(11) **EP 0 384 197 B1**
(45) Veröffentlichungstag und Bekanntmachung des Hinweises auf die Patenterteilung: **19.05.1993**
(21) Anmeldenummer: 90102160.0
(22) Anmeldetag: 03.02.1990
(51) Int. Cl.: A47J 43/07

(54) **Küchenvorrichtung, bestehend aus einer Rührschüssel und einem Standfuss**
Kitchen utensil comprising a mixing bowl and a stand
Ustensile de cuisine comportant un bol mélangeur et un socle

(30) Priorität: 18.02.1989 DE 8901922 U
(43) Veröffentlichungstag der Anmeldung: 29.08.1990
(73) Patentinhaber: EMSA-Werke Wulf GmbH & Co., 48282 Emsdetten (DE)
(72) Erfinder:
(74) Vertreter: Hoffmeister, Helmut, Dr. Dipl.-Phys.

(56) Entgegenhaltungen:
- CH-A- 451 443
- DE-A- 3 204 747
- DE-C- 1 165 819
- GB-A- 2 025 203
- US-A- 2 749 070

## Beschreibung

Die Erfindung betrifft eine Küchenvorrichtung, bestehend aus einer offenen Rührschüssel mit gewölbtem Boden und aus einem Standfuß mit einer rutschfesten Standfläche, der eine den Boden der Rührschüssel in verschiedenen Stellungen derselben haltende obere Aufnahmeseite besitzt.

Derartige Küchenvorrichtungen werden vornehmlich zum Anrühren von Teigen, Puddingen oder ähnlichem verwendet, wobei der gewölbte.Boden der Rührschüssel in die muldenförmig oder ringförmig ausgestaltete Aufnahmeseite des Standfußes eingreift. Die Rührschüssel ist gegenüber dem auf einer Arbeitsplatte feststehenden Standfuß verschwenkbar, so daß ein möglichst intensives Umwälzen und Verrühren der Rührmasse in der Schüssel mittels eines Rührgerätes ermöglicht wird.

Nachteilig wirkt sich frei Vorrichtungen dieser Art aus, daß die Rührschüssel, die in dem Standfuß wie in einem Kugelgelenk allseitig verschwenkbar ist, nicht in einer bestimmten Schräglage feststellbar ist und auch nicht gegen ein unbeabsichtigtes Lösen der Rührschüssel vom Fußteil gesichert ist.

Aufgabe der Erfindung ist es, eine standfeste Küchenvorrichtung der genannten Art anzugeben, bei der die Position der Rührschüssel gegenüber dem Standfuß sich nur willkürlich ändern läßt und die Position von Rührschüssel und Standfuß während des Arbeitens nicht verlassen wird.

Diese Aufgabe wird bei einer erfindungsgemäßen Küchenvorrichtung dadurch gelöst, daß die Aufnahmeseite des Standfußes und die Außenseite des Bodens mit miteinander kompatiblen Führungselementen ausgestattet sind, die ein Verschwenken und Festlegen der Rührschüssel nur entlang eines auf der gewölbten Außenseite verlaufenden Großkreises erlauben. Unter Großkreis wird eine auf der Wölbung der Rührschüssel außenseitig entlang der Führungselemente verlaufende Linie bezeichnet.

Die Führungselemente sind vorzugsweise in Form einander entsprechender .Nut- und Federelemente ausgestaltet. Dabei kann die Nut in dem Standfuß und die der Nutformung entsprechende Feder auf der Rührschüsseloberfläche vorgesehen sein, es kann jedoch auch umgekehrt verfahren werden. Auch andere Führungselemente, beispielsweise Raststege in Nuten und dgl. sind möglich. Vorteilhaft können die Führungselemente auch aus einer parallel geführten Doppelnut mit entsprechender Doppelfeder bestehen.

Um ein Ausrasten der Rührschüssel aus der Führung in dem Standfuß beim Rührbetrieb zu verhindern, ist die Nut mit einem Hinterschnitt ausgestattet, in dem die dieser Nutausgestaltung entsprechende Erweiterung der Feder eingreift und in dieser geführt wird.

Zum sicheren Festhalten und Verschwenken der Rührschüssel ist diese in dem Randbereich ihrer Öffnung mit einem Haltegriff versehen, der vorteilhafterweise so angebracht ist, daß er von einer durch den Großkreis gehenden Schnittebene ebenfalls durchschnitten wird. Eine derartige Anordnung des Haltegriffes ermöglicht ein Verschwenken der Rührschüssel mit geringem Kraftaufwand.

Eine Ausführungsform einer Küchenvorrichtung ist in der Zeichnung dargestellt und wird im folgenden näher beschrieben. Es zeigen:
- Figur 1: die schematische Seitenansicht einer erfindungsgemäßen Vorrichtung, wobei sich der Rührschüsselrand in waagerechter Stellung und parallel zum Standfuß befindet;
- Figur 2: die Vorrichtung nach Figur 1 mit zum Standfuß verschwenkter Rührschüssel;
- Figur 3: eine Draufsicht auf die Vorrichtung gemäß Figuur 1;
- Figur 4: einen Detail-Querschnitt durch den Verbindungsbereich von Rührschüsselboden und Standfuß.

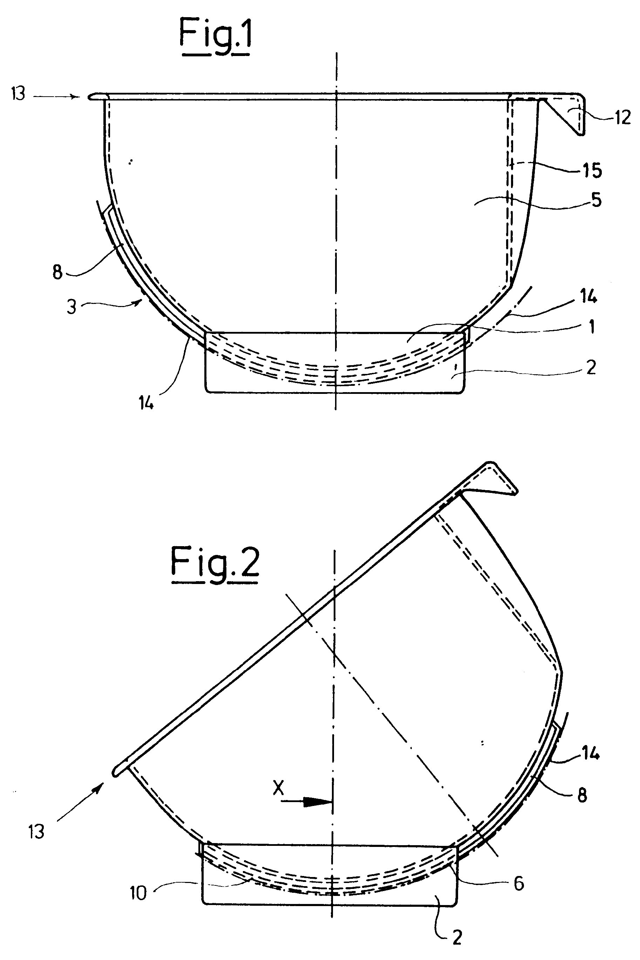

Wie aus dem in Figur 1 dargestellten Ausführungsbeispiel ersichtlich, besteht eine Küchenvorrichtung im wesentlichen aus einem Standfuß 2 und einer offenen Rührschüssel 5 mit gewölbter Außenseite, die in die mulden- oder ringförmig ausgebildete Aufnahmeseite 1 des Standfußes 2 schwenkbeweglich eingepaßt ist. Um ein allseitiges Verdrehen der Rührschüssel 5 gegenüber dem Standfuß 2 zu verhindern, weisen Außenseite der Rührschüssel und Standfuß einander entsprechende Führungselemente auf, nämlich eine Feder 8 und eine Nut 6, die ineinandergreifen und ein Verschwenken der Rührschüssel nur in einer durch die Richtung der Führungselemente 6, 8 bwz. eines entlang der Führungselemente verlaufenden Großkreises 14 (Linie -.-.-.) erlauben. Gleichzeitig gestatten sie es, die Rührschüssel 5 in einer bestimmten Schwenkposition festzustellen, was bei.spielsweise durch klemmen oder Rasten in an sich bekannter Art geschehen kann. Vorzugsweise werden die Nut und die Feder so eng aufeinander gepaßt, daß sie unter der Arbeitsbelastung und durch das leichte Bewegen der Rührschüssel gegenüber dem Standfuß sich ineinander verklemmen.

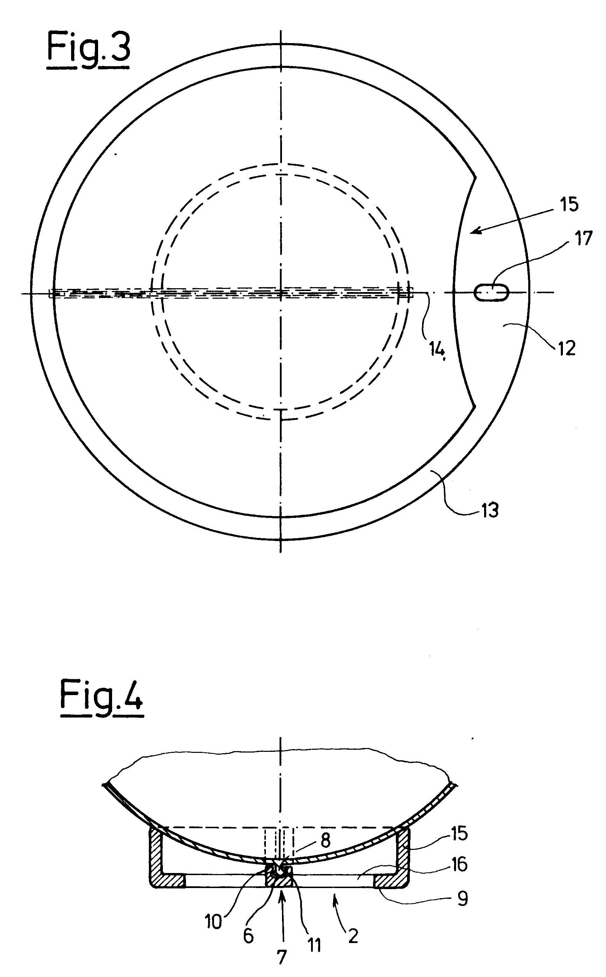

Zum Halten der Rührschüssel dient ein an ihrem Öffnungsrandbereich angebrachter Handgriff 12. Um einen ungestörten Eingriff zu ermöglichen, ist die Außenseite der Rührschüssel unterhalb des Griffes 12 abgeflacht. Wie aus Fig. 3. ersichtlich, ist im Griff (12) ein Langloch (17) angebracht.

In Figur 2 ist eine Küchenvorrichtung in verschwenktem Zustand der Rührschüssel dargestellt. Es ist erkennbar, daß die Feder zum Teil aus der Führung im Standfuß 2 herausgezogen werden kann. Nach völligem Herausziehen der Feder 8 gegenüber dem Standfuß 2 läßt sich die Rührschüssel auch vom Standfuß 2 trennen. Durch anschließendes Einschieben der Feder 8 in die Nut werden die beiden teile wieder verbunden.

Figur 3 veranschaulicht in einer Draufsicht die Ausgestaltung der Küchenvorrichtung. Der Handgriff 12 ist im Randbereich (13) der Rührschüssel 5 angebracht. Durch diese Anordnung ist ein Verschwenken der Rührschüssel mit Hilfe der Führungselemente mit einem geringen Kraftaufwand möglich.

Der in Figur 4 gezeigte Detail-Querschnitt verdeutlicht eine vorzugsweise Ausgestaltung der Führungselemente 6 und 8. Hier weist der Standfuß 2 einen gebogenen Teilring (10), auf der im Querschnitt etwa eine nach oben offene U-Form hat, wobei diese Form eine mit Hinterschnitt 7 versehene Nut 6 in sich trägt. Dementsprechend ist die an der Außenseite der Rührschüssel 5 angebrachte Feder 8 kammartig geformt, wobei Erweiterungen (11) vorgesehen sind, die dem Hinterschnitt der Nut 6 entsprechen. Durch diese Ausgestaltung der Führungselemente ist die Rührschüssel (5) mit dem Standfuß (2) fest verbunden. Sie kann durch leichtes Verkanten in einer beliebigen Schwenkposition festgesetzt werden. Auch verhindert die Führung ein unbeabsichtigtes Abheben d.h. Lösen der Rührschüssel vom Standfuß.

Die Rührschüssel 5 und die Führungselemente 6 bis (8) sind vorzugsweise aus thermoplastischen Kunststoffen hergestellt. Der Standfuß 2 kann zum Erzielen einer guten Rutschfestigkeit, wie in Figur 4 dargestellt, teilweise aus einem Ring 15 mit Teilring (10) aus thermoplastischen Kunststoffen und teilweise aus einem rutschfesten Teil 16 aus Kautschuk bestehen.

## Patentansprüche

1. Küchenvorrichtung, bestehend aus einer offenen Rührschüssel (5) mit gewölbtem Boden und aus einem Standfuß (2) mit einer rutschfesten Standfläche, der eine den Boden der Rührschüssel in verschiedenen Stellungen derselben haltende obere Aufnahmeseite besitzt,
dadurch gekennzeichnet, daß die Aufnahmeseite (1) des Standfußes (2) und die Außenseite des Bodens (3) mit einander kompatiblen Führungselemente (6, 8) ausgestattet sind, die ein Verschwenken und Festlegen der Rührschüssel (5) nur entlang eines auf der gewölbten Außenseite der Rührschüssel (5) verlaufenden Großkreises (14) erlauben.

2. Vorrichtung nach Anspruch 1,
dadurch gekennzeichnet, daß die Führungselemente Nut (6) und Feder (8) sind.

3. Vorrichtung nach den Ansprüchen 1 oder 2,
dadurch gekennzeichnet, daß die Nut (6) mit einem Hinterschnitt (7) ausgestattet ist, in der eine mit entsprechender Erweiterung ausgestattete Feder (8) geführt ist.

4. Vorrichtung nach den Ansprüchen 1 bis 3,
dadurch gekennzeichnet, daß der Fuß (2) aus einer Standvorrichtung (9) mit aufgesetztem Teilring (10) besteht, wobei letzterer eines der Führungselemente (6, 8) umfaßt.

5. Vorrichtung nach den Ansprüches 1 bis 4,
dadurch gekennzeichnet, daß die Rührschüssel (5) einen außenliegenden Kamm (11) trägt, der eines der Führungselemente (8) umfaßt.

6. Vorrichtung nach einem der vorhergehenden Ansprüche, dadurch gekennzeichnet, daß ein Haltegriff (12) im Randbereich (13) der Rührschüssel-Öffnung angebracht ist.

7. Vorrichtung nach Anspruch 6,
dadurch gekennzeichnet, daß die Außerseite der Rührschüssel (5) unterhalb des Haltegriffes (12) abgeflacht ist.

8. Vorrichtung nach einem der vorhergehenden Ansprüche, dadurch gekennzeichnet, daß die Rührschüssel (5) und die Führungselemente aus thermoplastischen Kunststoffen und der Standfuß (2) wenigstens teilweise aus Kautschuk besteht.

## Claims

1. A kitchen appliance, consisting of an open mixing bowl (5) having a curved base and a stand (2) with a non-slip surface, the stand having an upper receiving side which holds the mixing bowl in different positions, characterised in that the receiving side (1) of the stand (2) and the outside of the base (3) are equipped with mutually compatible guide elements (6, 8) which allow the mixing bowl (5) to be pivoted and secured only along a great circle (14) extending over the curved outside of the mixing bowl (5).

2. An appliance according to claim 1, characterised in that the guide elements are a groove (6) and a tongue (8).

3. An appliance according to claim 1 or 2, characterised in that the groove (6) has an undercut (7) in which there is guided a tongue (8) having a corresponding widening.

4. An appliance according to claims 1 to 3, characterised in that the stand (2) comprises a stand device (9) with a fitted dividing ring (10), the latter comprising one of the guide elements (6, 8).

5. An appliance according to claims 1 to 4, characterised in that the mixing bowl (5) bears an outer comb (11), which comprises one of the guide elements (8).

6. An appliance according to any one of the preceding claims, characterised in that a handle (12) is disposed in the edge zone (13) of the mixing bowl opening.

7. An appliance according to claim 6, characterised in that the outside of the mixing bowl (5) is flattened beneath the handle (12).

8. An appliance according to any one of the preceding claims, characterised in that the mixing bowl (5) and the guide elements consist of thermoplastics and the stand (2) consists at least partially of rubber.

## Revendications

1. Ustensile de cuisine composé d'un bol mélangeur (5) ouvert dont le fond est bombé et d'un socle (2) qui est pourvu d'une surface d'appui antidérapante et possède un côté de réception supérieur maintenant le fond du bol mélangeur dans différentes positions dudit bol, **caractérisé** en ce que le côté de réception (1) du socle (2) et le côté extérieur du fond (3) sont équipés d'éléments de guidage (6, 8) compatibles entre eux qui permettent un pivotement et une immobilisation du bol mélangeur (5) uniquement le long d'un grand cercle (14) s'étendant sur le côté extérieur bombé du bol mélangeur (5).

2. Ustensile selon la revendication 1, **caractérisé** en ce que les éléments de guidage sont une rainure (6) et un ressort (8).

3. Ustensile selon la revendication 1 ou 2, **caractérisé** en ce que la rainure (6) est munie d'une contre-dépouille (7) dans laquelle est guidé un ressort (8) pourvu d'une extension correspondante.

4. Ustensile selon les revendications 1 à 3, **caractérisé** en ce que le socle (2) est composé d'un dispositif d'appui (9) pourvu d'une bague partielle (10), cette dernière comprenant l'un des éléments de guidage (6, 8).

5. Ustensile selon les revendications 1 à 4, **caractérisé** en ce que le bol mélangeur (5) porte un peigne (11) extérieur qui comprend l'un des éléments de guidage (8).

6. Ustensile selon l'une des revendications précédentes, **caractérisé** en ce qu'une poignée (12) est disposée dans la zone marginale (13) de l'ouverture du bol mélangeur.

7. Ustensile selon la revendication 6, **caractérisé** en ce que le côté extérieur du bol mélangeur (5) est aplati en-dessous la poignée (12).

8. Ustensile selon l'une des revendications précédentes, **caractérisé** en ce que le bol mélangeur (5) et les éléments de guidage sont constitués de matières thermoplastiques et le socle (2) au moins en partie de caoutchouc.
